# EUROPÄISCHE PATENTSCHRIFT

(11) **EP 2 006 132 B1**
(45) Veröffentlichungstag und Bekanntmachung des Hinweises auf die Patenterteilung: **21.09.2011**
(21) Anmeldenummer: 08158504.4
(22) Anmeldetag: 18.06.2008
(51) Int. Cl.: B60H 1/34, B60J 7/22

(54) **Lamelle in einer Luftdüse**
Lamella in an air nozzle
Lamelle dans une buse d'air

(30) Priorität: 21.06.2007 DE 202007008676 U
(43) Veröffentlichungstag der Anmeldung: 24.12.2008
(73) Patentinhaber: Dr. Schneider Kunststoffwerke GmbH, 96317 Kronach (DE)
(72) Erfinder: Woetting, Ullrich, 95032, Hof (DE); Schmoelzer, Stefan, 95152, Selbitz (DE)
(74) Vertreter: Pröll, Jürgen

(56) Entgegenhaltungen:
- EP-A- 0 851 142
- EP-A- 1 342 601
- DE-C1- 19 510 637
- DE-U1-202006 004 052
- US-A1- 2005 012 433

## Beschreibung

Die Erfindung betrifft eine Lamelle aus Kunststoff mit An- und Ausformungen zum Verbinden mit anderen Bauelementen oder zur Lagerung oder zur Befestigung von Bauelementen für Fahrzeuge.

Unter Lamelle versteht die vorliegende Erfindung Teile in einem Kraftfahrzeug, beispielsweise in einem Personen-Kraftfahrzeug oder einem Last-Kraftfahrzeug, die eine größere Längserstreckung als Breitenerstreckung aufweisen. Solche Teile finden in vielfacher Hinsicht Verwendung. Erfindungsgemäß weisen Lamellen in einer Lamellenanordnung in einem Gehäuse einer Luftdüse solche Strukturen auf. Es kann sich dabei um vertikal und/oder um horizontal angeordnete Lamellen handeln bzw. um Lamellen in drehbaren Düsen, die jede Schräglage einnehmen können. Gestreckte Flachbaugruppen können Blenden oder Abdeckklappen sein, die zum Abdecken z. B. von in das Armaturenbrett eines Kraftfahrzeugs eingebauten Autoradios, CD-Playern oder Navigationsgeräten vorgesehen sind. Auch diese weisen eine gestreckte Form auf. Des Weiteren sind auch Windabweiser und Jalousie-Lamellen gestreckte Flachbaugruppen. Die Windabweiser, die üblicherweise aus Metall bestehen und sich aufstellen, wenn das Dachfenster geöffnet ist, werden teilweise auch aus Kunststoff hergestellt.

Bei allen Flachbaugruppen, die aus Kunststoff bestehen, besteht der Nachteil, dass diese bei geringen Dicken durch hohe Wärmebelastung, z. B. durch Sonneneinstrahlung in die Fahrgastzelle eines PKW's oder LKW's, sich ausdehnen und durchbiegen können sowie Spannungen freisetzen. Des Weiteren ist ein schlechtes Schwingungsverhalten gegeben. Werden darüber hinaus auf solchen gestreckten Flachbaugruppen Schieber angebracht, wie dies beispielsweise bei Lamellen in Luftdüsengehäusen der Fall ist, die als Steuerlamellen ausgebildet sind, um darüber andere Elemente betätigen zu können, so kommt diesen Lamellen darüber hinaus eine tragende Funktion zu. Jedes Durchbiegen kann dabei die Funktion des Schiebers beeinträchtigen. Des Weiteren sind diese Nachteile auch bei Jalousielamellen, die in Jalousienanordnungen beispielsweise zum Verdecken ganzer Geräteeinheiten oder auch Fenster vorhanden sind, gegeben. Selbst bei der Ausführung als Hohlprofil ist die Stabilität nicht gewährleistet. Darüber hinaus besteht ein höherer Platzbedarf im Aufwickelraum für solche Jalousien. Einfache, also dünne Jalousien, wie sie insbesondere in kleinen Räumen, beispielsweise bei der Abdeckung einer Bedienfront in einem Kraftfahrzeug, üblich sind, müssen aus Platzgründen als Flachprofil ausgebildet sein. Diese weisen aber eine geringe Stabilität auf, da sie als leicht durchbiegsame Baugruppe aus Kunststoff gefertigt sind.

Wenn eine Lamelle in einer Luftdüse, die üblicherweise aus Kunststoff gefertigt ist, eine größere Länge bzw. bei vertikaler Anordnung eine größere Höhe sowie ein relativ kleines Schiebeelement oder ein anderes Betätigungselement, z. B. ein Drehsteller, aufweist, erfolgt bei deren Betätigung eine erhöhte mechanische Belastung der Lamelle, was zum Durchbiegen derselben führen kann. Dies kann insbesondere bei mehrjährigem Gebrauch und bei hoher Temperaturbelastung durch Sonneneinstrahlung dazu führen, dass die Durchbiegung sich nicht mehr zurückstellt und damit die Reibung auf die Führung des Einstellelementes schwerer wird. Ferner kann bei jalousieartiger Anordnung von Lamellen ein uneinheitlicher Luftspalt auch durch Eigenverformung der Lamellen auftreten. Es hat sich ferner gezeigt, dass auch bei mechanisch relativ unbelasteten Lamellen solche Verbiegungen, insbesondere bei längerem Gebrauch und bei höheren thermischen Belastungen, eintreten können, insbesondere dann, wenn die Lamellen sehr dünn ausgeführt sind.

Aus DE 20 2006 004 052 U1 ist eine Lamelle für eine horizontale und/oder vertikale Lamellenanordnung in einem Gehäuse einer Luftdüse mit einer vorderen Luftaustrittsöffnung und einem Anschluss an einen Luftführungsschacht offenbart. Mindestens eine Lamelle ist als Dreh- oder Schiebeelement ausgebildet. Die mindestens eine Lamelle ist mit einem Einstellelement oder Anzeigeelement verbunden und besteht aus Kunststoff, wobei in Längsrichtung ein versteifendes metallisches Einlegeteil eingesetzt ist.

Um eine Lamelle, die mit einem Einstellelement versehen oder als Steuerlamelle ausgebildet ist, derart zu versteifen, dass sie den mechanischen Ansprüchen entspricht und ein Durchbiegen vermieden wird, ist in der DE 20 2006 004 052 U1 vorgeschlagen, die Lamelle als Verbundteil auszuführen und in Längserstreckung ein versteifendes metallisches Einlegeteil einzulegen, das sich im Wesentlichen über die gesamte Länge der Lamelle erstreckt und größtenteils oder vollständig mit dem Kunststoff umgeben ist. Diese Ausführung hat zudem den Vorteil, dass der metallische Einlegeteil zugleich als Stromleiter mit verwendet werden kann.

Aus der DE 20 2004 008 181 U1 ist ein aus Kunststoff bestehendes Lamellengitter einer vorzugsweise in ein Kraftfahrzeug einbaubaren Luftdüse mit einer Vielzahl verschwenkbarer Lamellen bekannt. Auf mindestens einer Lamelle ist ein längsverschiebbarer Reiter angeordnet, der mit zumindest einer quer zu den Lamellen im Lüftungsgehäuse verschwenkbar angeordneten Richtungslamelle verbunden ist. Mindestens die den Reiter tragende Lamelle weist eine sich in dessen Verschieberichtung erstreckende, aus einem galvanisch bearbeiteten Kunststoff bestehende Leiste auf.

Aus US 2005/0012433 A1 ist ein piezoelektrischer Antrieb in Form eines Rotors, bestehend aus Polymeren mit langer Lebensdauer, offenbart. Zur Herstellung dieses Rotors werden in das Polymer Fasern aus Kohlenstoff, Metall, Fieberglas integriert.

Aus DE 195 10 637 C1 ist eine Absperreinrichtung für eine Lüftungsöffnung, insbesondere für eine Klimaanlage, mit einem Rahmen und einem zum Verschließen und Freigeben der Lüftungsöffnung im Rahmen angeordneten Absperrorgan offenbart. Die Absperreinrichtung ist so ausgebildet, dass das Absperrorgan von mehreren Lamellen gebildet wird, wobei die nebeneinander angeordneten Lamellen an ihren zur Schwenkachse parallelen Randseiten gelenkig miteinander verbunden sind.

Aus EP 1 342 601 A1 ist ein Windabweiser für die Dachöffnung eines Kraftfahrzeugs offenbart. Dieser besteht aus unterschiedlichen Kunststoffkomponenten, welche einen Körper ausbilden. Dieser Körper besteht aus einem die Formbeständigkeit und Festigkeit sichernden Grundkörper und angespritzten Weichkunststoffelementen.

Aus DE 102 25 811 B4 ist eine Luftdüse gemäß Oberbegriff des Anspruchs 1 mit einem verstellbaren Lamellengitter offenbart. Die Düse weist ein Gehäuse und eine den sichtbaren Endbereich umschließende Abdeckblende auf. Das Lamellengitter besteht aus mehreren parallel im Abstand zueinander angeordneten Lamellen und mindestens einem quer zur Längserstreckung verlaufenden Lamellenkamm, durch den die mittels angeformter gegenüber dem Gehäuse ortsfest gehaltener Drehzapfen schwenkbar gelagerten und gemeinsam mit mindestens einem Lamellenkamm in dem Fertigungsgang durch Kunststoffspritzgießen hergestellten Lamellen miteinander verbunden sind. Das Lamellengitter ist komplett als Baueinheit gestaltet und kann in das Gehäuse eingesetzt werden.

Ausgehend vom bekannten Stand der Technik liegt der Erfindung die Aufgabe zugrunde, eine gestreckte Flachbaugruppe der gattungsgemäßen Art aus einem solchen Kunststoffmaterial herzustellen, das eine wesentlich höhere Steifigkeit der Flachbaugruppe sicherstellt und Durchbiegungen, bezogen auf die Verbaulänge und die Querschnittsgröße, deutlich vermindert.

Die Aufgabe löst die Erfindung durch Ausgestaltung der Lamelle gemäß der Lehre des Patentanspruches 1.

Vorteilhafte Weiterbildungen und Ausgestaltungsformen der Lamelle sind in den Unteransprüchen im Detail angegeben.

Die vorliegende Lamelle besteht aus Kunststoff und ist zum Einsatz und/oder Einbau in Fahrzeugen, vorzugsweise Kraftfahrzeugen, vorgesehen. Die Lamelle ist mit An- und Ausformungen zum Verbinden mit anderen Bauelementen oder zur Lagerung an oder zur Befestigung von Bauelementen ausgestattet. Die Lamelle besteht aus mit kurzen Fasern versetztem Polyarylamid und die Fasern sind Kohlenstofffasern, Metallfadenabschnitte oder Fasern aus Kunststoff mit aufgerauter Oberfläche. Die Lamelle weist eine Querschnittsstruktur auf, die flach, wellig oder auch eckig ausgebildet ist. Ebenso kann in gestreckter Richtung die Lamelle ebene, wellige oder auch verteilt eckige Strukturen aufweisen. Von der ebenen Form abweichende Strukturen sind einsatzbedingt und tragen zu einer Versteifung bei.

Erfindungsgemäß ist vorgesehen, dass die Lamelle in einer Lamellenanordnung in einem Gehäuse einer Luftdüse mit einer vorderen Luftaustrittsöffnung und einem hinteren Anschluss an einem Luftzuführschacht als gestrecktes Teil fest verbaut oder verschwenkbar gelagert ist und mindestens eine Lamelle der Lamellenanordnung eine Steuerlamelle ist und dass mindestens diese Lamelle ein Stellelement trägt, über das Steuerelemente in der Düse, insbesondere Vertikallamellenanordnung, bedienbar sind. Bevorzugt ist die mindestens eine Lamelle als Verbundteil ausgebildet, in welchem in Längserstreckung ein versteifendes metallisches Einlegeteil eingesetzt ist, das sich im Wesentlichen über die gesamte Länge der Lamelle erstreckt.

Eine andere Ausgestaltung der Erfindung sieht vor, dass mindestens eine Lamelle ein als Dreh- oder Schiebeelement ausgebildetes Einstellelement oder ein Anzeigeelement und ein versteifendes metallisches Einlegeteil aufweist und/oder das Einlegeteil einen überstehenden Randbereich aufweist, der zugleich Führungsteil für das Schiebeelement ist und/oder eine Stromversorgungsschiene für das Anzeigeelement bildet.

Weiterhin kann vorgesehen sein, dass das Einlegeteil mit einem Längsstreifen rückseitig aus dem Kunststoff vorsteht oder von dem Kunststoff vollständig umgeben ist und/oder des Einlegeteiles einen überstehenden Randbereich aufweist, der zugleich Führungsteil für das Schiebeelement ist und/oder eine Stromversorgungsschiene für das Anzeigeelement bildet.

Zur Begrenzung des seitlichen Verschiebeweges kann das Einlegeteil rückseitig mindestens eine vorstehende Erhöhung oder einen Ansatz aufweisen, die bzw. der einen Anschlag für das Schiebeelement bei seitlichem Verschieben bildet.

Um eine einfache Montage des Schiebeelementes zu erreichen, kann dieses aus zwei Hälften bestehen, die auf die Lamelle aufgesetzt und miteinander verbunden werden und die Lamelle in Tiefenrichtung beidseitig umschließen.

Die Lamelle weist erfindungsgemäß auch aus den oberen und unteren Stirnflächen vorstehende Lagerzapfen auf. Die Lagerzapfen können aus dem Kunststoff ausgeformte oder aus dem Einlegeteil ausgearbeitete Ansätze sein. Das Einlegeteil kann Ansätze aufweisen, die sich in die aus Kunststoff bestehenden Lagerzapfen erstrecken.

Um den Luftstrahl beim Austritt zu verwirbeln oder besser abzuleiten, ist in weiterer Ausgestaltung vorgesehen, dass im vorderen Bereich die Lamelle eine über mindestens eine Teillänge wulstförmige Verdickung aufweist.

Um eine hohe Steifigkeit zu erreichen, kann das Einlegeteil gerippt oder geprägt ausgeführt sein oder eine Rippen- oder Prägestruktur und/oder Löcher aufweisen. Das Einlegeteil kann auch ein Stanz-, ein Druckguss- oder ein Kunststoffformteil sein.

Als bevorzugte Dimensionierung der Lamelle kann diese eine Tiefe von 6 mm bis 35 mm und das Einlegeteil eine Tiefe von 4 mm bis 30 mm und/oder die Lamelle eine Dicke 0,75 mm bis 3,5 mm aufweisen.

Gemäß einer nicht erfindungsgemäßen Ausführung ist vorgesehen, dass eine Flachbaugruppe ein Windabweiser für eine Dachöffnung in einem Kraftfahrzeug in einem die Dachöffnung einfassenden Rahmen ist, in welchem ein Schiebedach oder ein Dachsichtfenster längsverschieblich gelagert ist, wobei der Windabweiser in einer Dachöffnung eines Kraftfahrzeuges mit einem die Dachöffnung einfassenden Rahmen angeordnet ist, in welchem ein Schiebedach oder ein Dachsichtfenster längsverschieblich gelagert ist, welcher Windabweiser vorn in der Dachöffnung querverlaufend vorgesehen und derart schwenkbeweglich am Rahmen gelagert ist, dass der Windabweisungsteil beim Zurückschieben des Schiebedaches oder des Dachsichtfensters in oder aus der Dachöffnung unter der Wirkung von Federkräften so weit ausgehoben ist, dass der Fahrtwind durch die in Fahrtrichtung nach oben schrägverlaufende Abgleitfläche abgleitet, wobei der Windabweiser eine Querschnittsform des Windabweisungsteils aufweist, die dreieckförmig verläuft und deren Spitze sich an der Oberseite befindet und unten offen ist und einen Mittenteil mit einer Länge von ca. 70 cm bis 90 cm und seitlich sich nach hinten erstreckende Schenkel aufweist, an deren Enden Lagerelemente ausgebildet sind, die in dem Rahmen des Schiebedaches oder des Dachsichtfensters schwenkbeweglich gelagert sind. Mindestens in den seitlichen Übergangsteilen können zur zusätzlichen Verstärkung versteifende metallische Einlegeteile vorgesehen sein.

Die nicht erfindungsgemäße Ausführung ist auch bei einer Lamellenjalousie einsetzbar, die z. B. in einem Kraftfahrzeuginnenraum zur Abdeckung von Bauteilen und Bauelementen vorgesehen sein kann.

Als Kunststoffmaterial für die Flachbaugruppe kann der unter dem Handelsnamen "Reny^{®} W110" erhältliche Kunststoff verwendet werden, der hierfür bestens geeignet ist. Versuche mit dem von der Firma Mitsubishi angebotenen, unter dem Namen "Reny^{®} W 110" angebotenen Kunststoff, einem Polyarylamid (PAA), der mit Fasern versetzt ist, haben gezeigt, dass damit nicht nur wirtschaftlich gestreckte Flachbaugruppen herstellbar sind, sondern dass diese eine gewünschte hohe Steifigkeit bei geringer Höhenausbildung bzw. Dicke aufweisen. Das Material eignet sich in vorteilhafter Weise für die Herstellung von Lamellen für Luftdüsen, gleich welcher Art und Ausprägung, sowie für Jalousielamellen, zur Herstellung von Jalousien verschiedenster Breite und Größe sowie für langgestreckte Windabweiser, die durch die hohe Stabilität und Steifigkeit vergleichbare Eigenschaften wie aus Blechstreifen geformte oder als Druckgussteil aus Magnesium oder Zinkdruckguss hergestellte Windabweiser aufweisen. Im Falle der verwendeten Fasern mit aufgerauter Oberfläche kann das Polyarylamid in die Poren eindringen und stützt den Verbund.

Wird eine Lamelle aus diesem Material hergestellt, so kann diese auch partiell metallisiert werden, so dass hierüber auch stromleitungsführende Bahnen realisiert werden können. Ebenso ist eine komplette Metallisierung möglich, z. B. ein Verchromen. Der Einsatz des Materials hat darüber hinaus gezeigt, dass die Formstabilität so hoch ist, dass auch nach Stress- oder Langzeittests eine Durchbiegung nicht gegeben ist, insbesondere auch dann nicht, wenn durch direkte Sonneneinstrahlung Temperaturen im Bereich von über 100° erreicht werden. Dies ist auf die eingebundenen Füllstoffe, nämlich Fasermaterial, zurückzuführen. Das Fasermaterial kann ein Karbonfasermaterial sein. Es können aber auch Kunststofffasern oder auch Metallfäden, also aus Metallfäden geschnittene Faserabschnitte, eingebunden sein. Dieses verstärkte Polyarylamid (PAA) ermöglicht eine Biegebelastbarkeit bei gleichem Querschnitt, die weit über dem Doppelten der Belastbarkeit anderer Kunststoffe liegt. Es bietet darüber hinaus eine hohe Schlagfestigkeit, so dass insbesondere bei der Verwendung in Windabweisern auch kleine Steinchen beim Aufschlag eine Beschädigung nicht zu bewirken vermögen.

Eine nach der Erfindung gefertigte Lamelle kann aber auch als Verbundlamelle ausgeführt sein, bei der der Metallträger von dem Polyarylamid mit den eingebundenen Faserstoffen umspritzt ist und im Spritzvorgang unmittelbar die endgültige Form der Oberflächengestaltung annimmt. Die Verbundlamelle kann auch aus zwei Kunststoffkomponenten bestehen, nämlich aus Polyarylamid und aus einer Hartkunststoffkomponente, z. B. galvanisierbarem Kunststoff. Eine solche Verbindung ist als Hart/Hart-Kunststoffverbindung anzusehen. Es kann aber auch eine Kombination mit einer Weich-Kunststoffkomponente gewählt werden. Der Verbund selbst kann mechanisch oder chemisch erfolgen; mechanisch durch Zusammenfügen der Teile, chemisch im Zweikomponentenspritzgußverfahren.

Durch die Verwendung der Kunststoffkomponente zum Einbetten des Einlegeteils wird zugleich eine gewünschte Oberflächenstruktur erreicht und es ist nicht mehr notwendig, dass das Teil danach spritzlackiert wird. Bestehen die Lamellen in bekannter Weise hingegen aus Druckguss, so müssen die Oberflächen dieser nachbehandelt und lackiert werden, um eine Oberflächengüte zu erreichen. Die Lamellenanordnung kann aus miteinander bewegungsgekoppelten, vertikal oder horizontal oder schräg verlaufend in dem Düsengehäuse verschwenkbar gelagerten Lamellen bestehen. Die Lamellen können aber auch in einem mit dem Gehäuse verbundenen Rahmen gelagert sein. Bei einem drehbaren runden Düsengehäuse weisen die Lamellen unterschiedliche Längen auf und können in beliebige Winkelstellungen zur Horizontalen z. B. des Kraftfahrzeuges eingestellt werden. Die Lamellenanordnung und die Luftdüse finden beispielsweise Verwendung in den Fahrgasträumen eines Kraftfahrzeuges, eines anderen Land- oder Luftfahrzeuges sowie in Fahrgasträumen in Schiffen.

Das gemäß der Erfindung vorgesehene metallische Einlegeteil, das die Lamelle zusätzlich versteift, sollte sich im Wesentlichen über die gesamte Länge der Lamelle erstrecken. Das metallische Einlegeteil braucht sich aber nicht über die gesamte Tiefe der Lamelle zu erstrecken. Es reicht hier, dass ein Teil der Lamelle versteift wird. Die Lamelle ist auch dann noch wesentlich steifer als eine Lamelle, die nur aus Kunststoff besteht. Wenn sich das Einlegeteil über etwa zwei Drittel der Länge erstreckt, so ist bei einer Lamellendicke von ca. 2 bis 3 mm bereits eine so hohe Steifigkeit gegeben, dass ein Durchbiegen auch bei stärkeren mechanischen Belastungen verhindert wird. Das Einlegeteil kann aber auch in der Länge kurz vor den Stirnseiten enden, so dass dann immer noch eine Einbettung gegeben ist. Als Einlegeteil kann ein Stanzteil verwendet werden. Dieses Stanzteil kann über die Länge verteilt Löcher aufweisen, in die der Kunststoff beim Umspritzen fließt, so dass eine sehr starre Verbindung entsteht. Die Löcher können Durchgangslöcher oder Sacklöcher sein. Es können aber auch gerippte oder geprägte Metallteile eingelegt werden.

Als besonders vorteilhaft hat es sich erwiesen, das Einlegeteil rückseitig über die Kunststoffeinbettung hinaus vorstehen zu lassen. Dadurch kann die vorstehende Metallschiene, die dadurch gegeben ist, zugleich als Führungsschiene für ein Schiebeelement, das auf die Lamelle aufgesetzt wird, verwendet werden. Auch kann das Metallteil als Stromschiene eingesetzt werden. Der überstehende Teil kann im Werkzeug auch als Abstützrippe verwendet werden. Der nicht umspritzte Teil kann zur farblichen Anpassung oder zum Verdecken beschichtet oder mit einem Farbauftrag versehen sein. In diesem Fall ist eine zweite Stromschiene beispielsweise durch eine stromleitende Lackierschicht auf dem Kunststoffteil zu realisieren, um z.B. eine Lichtquelle, z.B. eine Diode innerhalb des Schiebeelementes, im Bedarfsfall mit Strom versorgen zu können.

Anstelle von Schiebeelementen können selbstverständlich auch Drehelemente angebracht sein, die manuell betätigbar sind und für unterschiedliche Funktionen verwendet werden können. Anstelle von Schiebeelementen, die in der Regel dazu dienen, um senkrecht verlaufende Lamellen über Mitkopplungselemente betätigen zu können, können auch Drehelemente vorgesehen sein, die zum gleichen Zweck oder zu anderen Funktionssteuerungen verwendet werden können. Ebenso können auch feststehende Anzeigeelemente angebracht sein. Dies ist insbesondere dann der Fall, wenn die Lamelle selbst als Steuerlamelle ausgebildet ist und durch ihr Verschwenken über Kopplungsglieder weitere Lamellen in einer Jalousie-Anordnung betätigt werden.

Spritztechnisch hat es sich auch als vorteilhaft erwiesen, das Einlegeteil in ein Spritzgießwerkzeug einzulegen und vorderseitig eine Materialverdickung in Wulstform anzuspritzen, so dass die Lamelle in Ausströmrichtung wulstförmig ausgebildet ist und der Luftstrom hierüber abgelenkt und verwirbelt werden kann. Die die Schwenkachse realisierenden Zapfen können stirnseitig an den Schmalflächen aus dem Kunststoff ausgeformt sein oder aber auch an den Einlegeteilen seitlich vorstehen und aus dem Kunststoff hervortreten, wenn es gewünscht ist, dass ein Metallzapfen als Lagerzapfen in eine Lagerausnehmung in der Gehäusewand eingesetzt werden soll.

Im Falle, dass das Einlegeteil die Kunststoffmasse rückseitig übersteht, können an dem Einlegeteil auch Anschläge, beispielsweise ein mittiger, nach hinten vorstehender breiter Ansatz, vorgesehen sein, um den Schiebeweg eines Schiebeelementes zu begrenzen. Das Schiebeelement weist in der inneren Führung Seitenanschläge auf, so dass der Schiebeweg als solcher hierüber begrenzt wird. Die Schiebeelemente bestehen in der Regel aus zwei Seitenelementen, die von unten und oben auf die Lamelle aufgesetzt werden und miteinander durch Rast- oder Schweißverbindung verbunden sind. Solche Ausbildungen sind in den eingangs genannten Schriften angegeben.

Werden auch andere Lamellen versteift, die beispielsweise nicht als Steuerlamelle oder als Lamelle mit Einstellelementen ausgeführt sind, so kann nach der gleichen Weise verfahren werden. Dies hat den Vorteil, dass insbesondere bei langen Lamellen ein Durchbiegen durch Eigengewicht und/oder thermische Einwirkung vermieden wird.

Vorteilhafte Abmessungen von Lamelle und Einlegeteil, wie z.B. die Tiefen, und vorteilhafte Randüberstände des Einlegeteils sind im Anspruch 12 angegeben.

Die Erfindung wird nachfolgend anhand der in den Zeichnungen dargestellten Ausführungsbeispiele ergänzend erläutert.

In den Zeichnungen zeigen:
- Fig. 1: eine Lamelle, wie sie in Lamellenanordnungen für Luftdüsen üblich ist,
- Fig. 2: ein nicht erfindungsgemäßes Jalousieblatt, wie es für die Herstellung einer Jalousie benötigt wird,
- Fig. 3: einen nicht erfindungsgemäßen Windabweiser,
- Fig. 4: eine Lamelle mit einem eingesetzten Einlegeteil und
- Fig. 5: die Lamelle gemäß Fig. 4 mit einem Schiebeelement.

Zur besseren Verständlichkeit der Erfindung werden gleiche Elemente in den Figuren mit gleichen Bezugszeichen versehen. Dies dient der Übersichtlichkeit der Erfindung und der weiteren Beschreibung. In den einzelnen Figuren werden aber zumeist nur die Bezugszeichen verwendet, welche für die entsprechende Figurenbeschreibung und die Darstellung der Erfindung wesentlich sind.

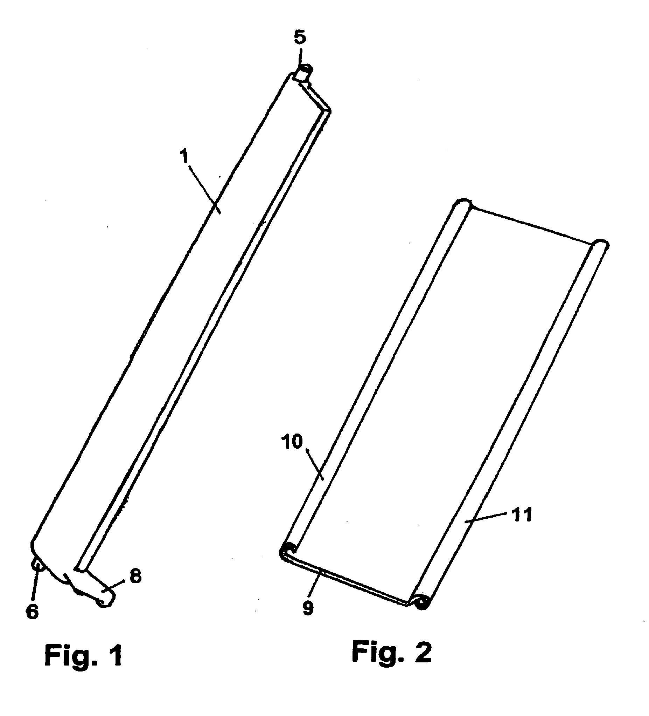

In Fig. 1 ist eine Lamelle 1 für eine Lamellenanordnung in einem Gehäuse einer Luftdüse dargestellt. Diese Lamelle kann beispielsweise 100 mm lang, 10 mm bis ca. 25 mm breit und 0,8 mm bis ca. 2,5 mm dick sein. Die Lamelle weist ferner angeformte Lagerzapfen 5 und 6 auf, sowie einen angeformten Arm 8 mit einem Lagerzapfen, auf den ein Verbindungsteil aufgesteckt wird, mit dem verschiedene Lamellen gekoppelt sind. Alternativ kann auch eine Lamellenform vorgesehen sein, die an Stelle der angeformten Lagerzapfen Lagerbohrungen aufweist, die dann mittels Metallstifte (Lagerstifte) mit dem zugehörigen Gehäuse schwenkbeweglich verbunden werden. Beim Verschieben dieses Verbindungsteils werden automatisch alle Lamellen einer Anordnung verschwenkt. Das Verbindungsteil kann auch Leitkurven aufweisen, so dass die parallel in einem Gehäuse oder einem Rahmenteil einer Luftdüse gelagerten Wellen sich in unterschiedlichen Winkeln verstellen. Erfindungsgemäß ist nun diese Lamelle aus dem unter dem Handelsnamen "Reny^{®} W110" von der Firma Mitsubishi angebotenen faserverstärkten Polyarylamid hergestellt und weist selbst bei schmaler Ausfertigung von 0,8 mm eine hohe Biegesteifigkeit (46300 MPa nach ISO 178) auf, so dass bei den angegebenen Abmessungen kein Durchbiegen gegeben ist.

Fig. 2 zeigt ein nicht erfindungsgemäßes Beispiel einer gestreckten Flachbaugruppe, nämlich eine Jalousielamelle 9, die dünnwandig, z. B. 0,8 mm dick ist, und an ihren längsseitigen Enden hakenförmige Umbiegungen 10 und 11 aufweist, die bei Aneinanderreihung mehrerer Lamellen 9 ineinandergehakt werden können, wodurch eine Jalousie entsteht, die sich auf eine Aufnahmewelle aufwickeln und wieder abwickeln lässt. Solche Jalousien werden beispielsweise in einem Kraftfahrzeug zur Abdeckung der Bedienelemente und sonstiger Apparaturen, die im mittleren Unterbau des Armaturenbrettes eingebaut sind, verwendet. Solche Lamellen können aber auch über Öffnungen schiebbar ausgeführt sein. Es ist ersichtlich, dass auch diese Lamelle, gefertigt aus dem Material "Reny^{®} W110", eine hohe Steifigkeit aufweist, so dass eine Durchbiegung oder ein Flattern weitestgehend vermieden wird, selbst dann, wenn die Lamelle eine große Länge aufweist. Solche Lamellenkörper können als gestreckte Flachbaugruppen auch als Lamellen für ein Fenster verwendet werden.

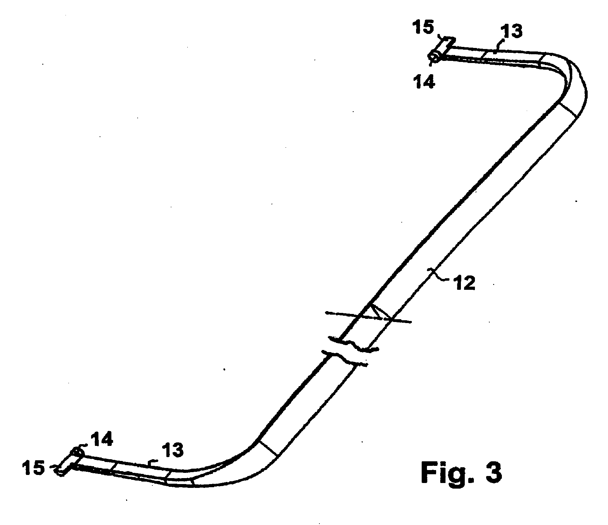

Fig. 3 zeigt ein Beispiel eines nicht erfindungsgemäßes Windabweisers, der beispielsweise 35 mm hoch ist und eine Länge von 700 mm bis 900 mm aufweist. Der Windabweiser 12 wird in einen Rahmen eines Dachfensters eines Kraftfahrzeuges eingebaut. Hierzu sind die seitlichen Schenkel 13 vorgesehen, an deren Enden sich Lageransätze 15 sowie Fixierabschlüsse 14 befinden. Auch dieser Windabweiser ist aus dem unter dem Handelsnamen "Reny ^{®} W 110" von der Firma Mitsubishi angebotenen Kunststoff hergestellt und weist eine hohe Steifigkeit auf. Darüber hinaus ist das Material schlagfest, so dass auch bei aufgestelltem Windabweiser anfliegende Sandkörner oder Kleinsteine keine Beschädigungen bewirken. Der Windabweiser selbst kann leicht dreieckförmig ausgeführt sein und beispielsweise eine Basisdicke von 3 mm bis ca. 5 mm und eine Dicke an der Spitze von ca. 1 mm aufweisen. Darüber hinaus kann er sogar länger ausgebildet sein, z. B. auch 900 mm, um in größeren Dachfenstern verbaut werden zu können. Die Verwendung solcher Windabweiser ist in der DE 43 23 694 C2 beschrieben.

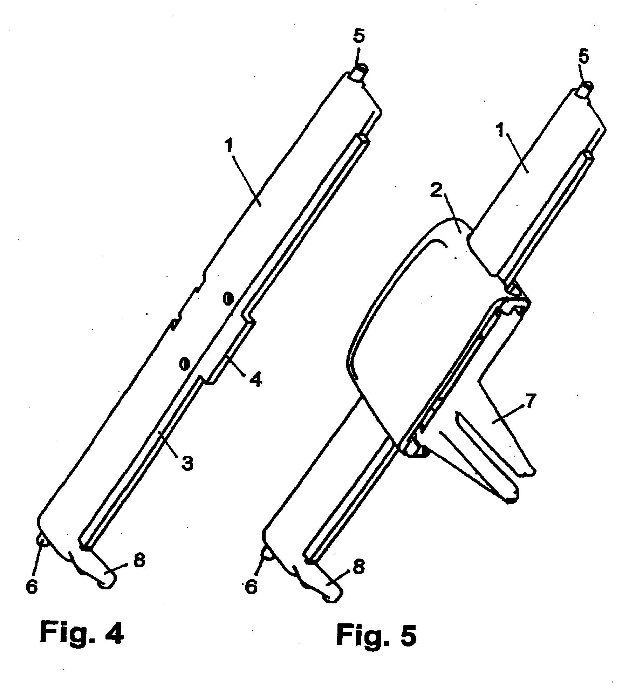

In Fig. 4 und 5 ist eine Lamelle für eine Luftdüsenanordnung dargestellt, die zusätzlich mit einem Einlegeteil verstärkt ist. Diese Lamelle ist im Verbundspritzverfahren ebenfalls unter Verwendung des Kunststoffes mit dem Handelsnamen "Reny^{®} W110" hergestellt.

Als Einlegeteil 3 ist ein Blechstanzstreifen vorgesehen, der mit Bohrungen versehen ist. Diese Bohrungen werden beim Umspritzen in einem Spritzwerkzeug mit der Kunststoffmasse verfüllt, so dass ein Teil entsteht, das aus dem metallischen Einlegeteil 3 und dem Kunststoffteil der Lamelle 1 gebildet wird. Es ist ersichtlich, dass durch das lange Einlegeteil 3 eine sehr steife Ausführung der Kunststofflamelle gegeben ist. Diese Kunststofflamelle 1 kann stirnseitig wulstförmig ausgeführt sein und oben und unten Lagerzapfen 5, 6 aufweisen, so dass die Lamelle als Horizontal- oder Vertikallamelle eingesetzt werden kann. Die Darstellung zeigt eine lineare Ausführung. Die Lamelle kann aber auch geschwungen in Längsrichtung ausgeführt sein. Bei einer Lamelle mit einem aufgesetzten Schiebeelement, wie es aus Fig. 5 ersichtlich ist, ist es jedoch empfehlenswert, zumindest den mittleren Teil, in welchem das Schiebeelement 2 verschieblich angeordnet ist, geradlinig auszuführen. Das Schiebeelement 2 kann z.B. wie in der DE 201 18 014 U1 oder in der DE 20 2004 006 461 U1 angegeben ausgebildet sein. Rückseitig können über das Mitkopplungselement 7 andere Lamellen in anderen Lagen betätigt werden. Die Lamelle 1 selbst weist im Ausführungsbeispiel unten jeweils einen Ansatz 8 mit Lagerungen für Kopplungsglieder auf, damit parallel liegende Lamellen beim Verschwenken mit verschwenkt werden können bzw. die Lamelle 1 durch einen gesonderten Antrieb verschwenkt werden kann. Diese Techniken sind bekannt und nicht erfindungsrelevant.

Die Darstellung in Fig. 4 zeigt, dass mittig ein rückseitig herausstehender Ansatz 4 an dem Einlegeteil 3 vorgesehen ist. Dieser Ansatz weist äußere Ecken auf, die als Anschlagskanten für das Schiebeelement 2 dienen, das die Lamelle 1 in diesem Bereich vollständig umschließt. Der Ansatz gleitet in nicht dargestellte Ausnehmungen des Schiebeelementes, so dass eine seitliche Begrenzung des Schiebeweges hierdurch gegeben ist. Die Abbildungen zeigen ferner, dass der Einlegeteil 3 die Kunststoffmasse rückseitig übersteht, so dass dieser Teil zugleich als Führungsteil für das Schiebeelement mitverwendet werden kann.

### Bezugszeichenliste

- 1: Lamelle
- 2: Schiebeelement
- 3: Einlegeteil
- 4: Ansatz
- 5: Lagerzapfen
- 6: Lagerzapfen
- 7: Mitkopplungselement
- 8: angeformter Arm
- 9: Jalousielamelle
- 10: Umbiegung
- 11: Umbiegung
- 12: Windabweiser
- 13: Schenkel
- 14: Fixierabschluss
- 15: Lageransatz

## Patentansprüche

1. Lamelle (1, 9) in einer Lamellenanordnung in einem Gehäuse einer Luftdüse mit einer vorderen Luftaustrittsöffnung und einem hinteren Anschluss an einem Luftzuführschacht, welche als gestrecktes Teil fest verbaut oder verschwenkbar gelagert ist, und die Lamelle (1,9) aus den oberen und unteren oder seitlichen Stirnflächen vorstehende Lagerzapfen (5, 6) und eine flache, wellige und/oder eckige Querschnittsstruktur aufweist, **dadurch gekennzeichnet, dass** die Lamelle (1, 9) aus mit kurzen Fasern versetztem Polyarylamid besteht, wobei die kurzen Fasern Kohlenstofffasern, Metallfadenabschnitte oder Fasern aus Kunststoff mit aufgerauter Oberfläche sind und die Lamelle (1,9) in der Lamellenanordnung eine Steuerlamelle ist und dass mindestens diese Lamelle (1,9) ein Stellelement (2) trägt, über das mindestens ein den Luftstrom ablenkendes Mittel in der Düse, insbesondere Vertikallamellen, bedienbar ist/ sind.

2. Lamelle (1, 9) nach Anspruch 1, **dadurch gekennzeichnet, dass** die mindestens eine Lamelle (1, 9) als Verbundteil ausgebildet ist, in welchem in Längserstreckung ein versteifendes metallisches Einlegeteil (3) eingesetzt ist, das sich im Wesentlichen über die gesamte Länge der Lamelle (1,9) erstreckt.

3. Lamelle (1, 9) nach Anspruch 1, **dadurch gekennzeichnet, dass** mindestens eine Lamelle (1,9) ein als Dreh- oder Schiebeelement ausgebildetes Einstellelement (2) oder ein Anzeigeelement aufweist oder mindestens partiell metallisiert ist.

4. Lamelle (1, 9) nach Anspruch 2, **dadurch gekennzeichnet, dass** das Einlegeteil (3) mit einem Längsstreifen rückseitig aus dem Kunststoff vorsteht oder von dem Kunststoff vollständig umgeben ist, wobei der überstehende Randbereich des Einlegeteiles (3) zugleich Führungsteil für ein Schiebeelement als Einstellelement (2) ist und/oder eine Stromversorgungsschiene für ein Anzeigeelement bildet.

5. Lamelle (1, 9) nach Anspruch 4, **dadurch gekennzeichnet, dass** das Einlegeteil (3) rückseitig mindestens eine vorstehende Erhöhung oder einen Ansatz (4) aufweist, die bzw. der einen Anschlag für das Schiebeelement (2) bei seitlichem Verschieben bildet.

6. Lamelle (1, 9) nach Anspruch 1, 3 oder 5, **dadurch gekennzeichnet, dass** das Schiebeelement (2) die Lamelle (1, 9) in Tiefenrichtung beidseitig umschließt.

7. Lamelle (1, 9) nach Anspruch 2, **dadurch gekennzeichnet, dass** im vorderen Bereich die Lamelle (1, 9) eine über mindestens eine Teillänge wulstförmige Verdickung aufweist, die den Luftstrahl beim Austritt verwirbelt oder ableitet.

8. Lamelle (1, 9) nach Anspruch 1, **dadurch gekennzeichnet, dass** die Lagerzapfen (5, 6) aus dem Kunststoff ausgeformte oder aus dem Einlegeteil (3) ausgearbeitete Ansätze sind oder dass das Einlegeteil (3) Ansätze aufweist, die sich in die aus Kunststoff bestehenden Lagerzapfen (5, 6) erstrecken.

9. Lamelle (1, 9) nach Anspruch 2, **dadurch gekennzeichnet, dass** das Einlegeteil (3) gerippt oder geprägt ist oder eine Rippen- oder Prägestruktur und/oder Löcher aufweist, wobei das Einlegeteil (3) ein Stanz-, ein Druckguss- oder ein Kunststoffteil ist.

10. Lamelle (1, 9) nach Anspruch 2, **dadurch gekennzeichnet, dass** die Lamelle (1, 9) eine Tiefe von 6 bis 35 mm und das Einlegeteil (3) eine Tiefe von 4 bis 30 mm aufweisen und/oder die Lamelle (1, 9) 0,75 bis 3,5 mm dick ist.

## Claims

1. Slat (1, 9) in a slat arrangement in a housing of an air nozzle with a front air outlet opening and a rear connection to an air feed shaft, which is fixedly constructed as an elongate part or mounted to be pivotable, and the slat (1, 9) comprises bearing pins (5, 6), which protrude from the upper and lower or lateral end surfaces and a flat, wavy and/or polygonal cross-section sectional structure, **characterised in that** the slat (1, 9) consists of polyarylamide mixed with short fibres, wherein the short fibres are carbon fibres, metal thread lengths or fibres of synthetic material with a roughened surface and the slat (1, 9) in the slat arrangement is a control slat and that at least this slat (1, 9) carries a setting element (2) by way of which the at least one means, which deflect the air flow, particularly vertical slats, in the nozzle is or are operable.

2. Slat (1, 9) according to claim 1, **characterised in that** the at least one slat (1, 9) is constructed as a composite part in which a stiffening metallic insert part (3) is inserted in length direction and extends substantially over the entire length of the slat (1, 9).

3. Slat (1, 9) according to claim 1, **characterised in that** at least one slat (1, 9) has a setting element (2), which is constructed as a rotary or slide element or an indicating element or is at least partially metallised.

4. Slat (1, 9) according to claim 2, **characterised in that** the insert part (3) protrudes by a longitudinal strip at the rear side from the synthetic material or is completely surrounded by the synthetic material, wherein the protruding edge region of the insert part (3) is at the same time a guide part for a slide element as setting element (2) and/or forms a power supply rail for an indicating element.

5. Slat (1, 9) according to claim 4, **characterised in that** insert part (3) has on the rear side at least one protruding elevation or a projection (4) forming an abutment for the slide element (2) when lateral displacement takes place.

6. Slat (1, 9) according to claim 1, 3 or 5, **characterised in that** the slide element (2) surrounds the slat (1, 9) in depth direction on both sides.

7. Slat (1, 9) according to claim 2, **characterised in that** in the front region the slat (1, 9) has over at least a part of its length a bead-shaped thickening which swirls or diverts the air jet when it issues.

8. Slat (1, 9) according to claim 1, **characterised in that** the bearing pins (5, 6) are projections formed from the synthetic material or made from the insert part (3) or that the insert part (3) has projections which extend in the bearing pins (5, 6) consisting of synthetic material.

9. Slat (1, 9) according to claim 2, **characterised in that** the insert part (3) is ribbed or embossed or has a ribbed or embossed structure and/or holes, wherein the insert part (3) is a punched part, a diecast part or a synthetic material part.

10. Slat (1, 9) according to claim 2, **characterised in that** the slat (1, 9) has a depth of 6 to 35 millimetres and the insert part (3) has a depth of 4 to 30 millimetres and/or the slat (1, 9) is 0.74 to 3.5 millimetres thick.

## Revendications

1. Lamelle (1,9), dans un agencement de lamelles dans le carter d'une buse à air avec une ouverture avant de sortie d'air et un raccordement arrière à un puits d'amenée d'air, qui est montée fixement en tant que pièce étirée ou peut être placée de façon à basculer et la lamelle (1,9) sur les tourillons (5,6) supérieurs, inférieurs ou latéraux des surfaces avant et qui présente une structure de coupe plate, ondulée et/ou carrée **caractérisée en ce**la que la lamelle (1,9) est composée de polyarylamide recouverte de fibres courtes pour lesquelles les fibres courtes sont des fibres carbone, des sections de fils métalliques ou des fibres en plastique à la surface grenelée et **caractérisée en cela que** la lamelle (1,9) dans l'agencement de lamelles est une lamelle de contrôle et cette lamelle (1,9) comporte au moins un élément de positionnement (2) par lequel au moins un moyen détournant le flux d'air dans la buse, en particulier les lamelles verticales, est maniable.

2. Lamelle (1,9), selon la revendication 1, **caractérisée en cela qu**'au moins une lamelle (1,9) se présente comme une pièce de liaison dans laquelle une pièce d'insert (3) métallique de raidissement est placée à angle droit et s'étend essentiellement au-dessus de la longueur totale de la lamelle (1,9).

3. Lamelle (1,9), selon la revendication 1, **caractérisée en cela qu**'au moins une lamelle (1,9) présente un élément de réglage (2), sous la forme d'un élément rotatif ou d'un élément poussoir, ou un élément d'affichage ou est métallisée au moins partiellement.

4. Lamelle (1,9), selon la revendication 2, **caractérisée en cela que** la pièce d'insert (3) se trouve à l'arrière sur le côté en plastique de la longueur ou est entièrement entourée par le plastique, le bord supérieur de la pièce d'insert (3) étant à la fois une pièce conductrice pour un élément poussoir faisant fonction d'élément de réglage (2) et/ou forme un rail d'alimentation électrique pour un élément d'affichage.

5. Lamelle (1,9), selon la revendication 4, **caractérisée en cela que** la pièce d'insert (3) possède dans le dos au moins une élévation en avant ou présente une bosse (4) qui forme la butée pour l'élément poussoir (2) en cas de déplacement latéral.

6. Lamelle (1,9), selon les revendications 1, 3 ou 5, **caractérisée en cela que** l'élément poussoir (2) entoure la lamelle (1,9) des deux côtés dans le sens de la profondeur.

7. Lamelle (1,9), selon la revendication 2, **caractérisée en cela que** dans l'espace avant la lamelle (1,9) présente sur au moins une longueur partielle une grosseur de forme de boudin qui fait tourbillonner le faisceau d'air lorsqu'il sort ou le dévie.

8. Lamelle (1,9), selon la revendication 1, **caractérisée en cela que** les tourillons (5,6) sont des bosses travaillées à partir de la pièce d'insert (3) ou formées à partir du plastique ou que la pièce d'insert (3) présente des bosses qui s'étendent dans les tourillons (5,6) en plastique.

9. Lamelle (1,9), selon la revendication 2, **caractérisée en cela que** la pièce d'insert (3) est nervurée ou estampée ou présente une structure nervurée ou estampée et/ou des trous et pour laquelle la pièce d'insert (3) est une pièce estampée, en fonte injectée ou en plastique

10. Lamelle (1,9), selon la revendication 2, **caractérisée en cela que** la lamelle (1,9) présente une profondeur de 6 à 35 mm et la pièce d'insert (3) présente une profondeur de 4 à 30 mm et/ou la lamelle (1,9) est épaisse de 0,75 à 3,5 mm.
